# EUROPÄISCHE PATENTSCHRIFT

(11) **EP 1 783 300 B1**
(45) Veröffentlichungstag und Bekanntmachung des Hinweises auf die Patenterteilung: **27.02.2013**
(21) Anmeldenummer: 06122460.6
(22) Anmeldetag: 17.10.2006
(51) Int. Cl.: E04F 13/08, F16B 33/00, F16B 13/00, F16B 13/12

(54) **Befestigungselement für die Befestigung von Dämmstoffplatten**
Fastening mean for fastening insulation boards
Élément de fixation pour panneaux d'isolation.

(30) Priorität: 02.11.2005 DE 102005000147
(43) Veröffentlichungstag der Anmeldung: 09.05.2007
(73) Patentinhaber: HILTI Aktiengesellschaft, 9494 Schaan (LI)
(72) Erfinder: Zimmerer, Claudia, 88131, Lindau (DE); Spröwitz, Michael, 6800, Feldkirch-Tisis (AT)
(74) Vertreter: Wildi, Roland

(56) Entgegenhaltungen:
- EP-A1- 1 046 764
- EP-A1- 1 400 704
- EP-A1- 1 522 744
- EP-A2- 0 811 773
- DE-A1- 10 159 632
- DE-C1- 4 039 831
- DE-U1- 29 623 122
- FR-A1- 2 713 291

## Beschreibung

### Technisches Gebiet

Die Erfindung betrifft ein Befestigungselement für die Befestigung von Dämmstoffplatten an einer Unterkonstruktion, der im Oberbegriff des Patentanspruchs 1 genannten Art.

### Stand der Technik

Zur Befestigung von Dämmstoffplatten, beispielsweise eines Wärmedämm-Verbundsystems, an einer Unterkonstruktion, wie z. B. an einer Wand, werden als Befestigungselemente Kunststoffdübel mit einem Spreizelement verwendet.

Aus der gattungsbildenden DE 296 23 122 U1 ist ein Befestigungselement für die Befestigung von Dämmstoffplatten an einer Unterkonstruktion bekannt, das einen Dübelschaft aufweist. Der Dübelschaft weist einen Durchmesser auf und erstreckt sich entlang einer Längsachse. Weiter weist der Dübelschaft an einem ersten Ende eine mittels eines Spreiznagels aufweitbare Spreizzone auf. An einem zweiten, dem ersten Ende gegenüberliegenden Ende des Dübelschafts ist einen Druckteller angeordnet.

Nachteilig an der bekannten Lösung ist, dass der Druckteller an der Oberfläche der Dämmstoffplatte zu liegen kommt und beim anschliessenden Verputzen der Dämmstoffplatte ein unregelmässiges Erscheinungsbild entstehen kann.

Aus der DE 101 59 632 A1 ist ein Befestigungselement für die Befestigung von Dämmstoffplatten an einer Unterkonstruktion bekannt, das einen Dübelschaft aufweist. Der Dübelschaft weist einen Durchmesser auf und erstreckt sich entlang einer Längsachse. Weiter weist der Dübelschaft an einem ersten Ende eine mittels eines Spreizelementes aufweitbare Spreizzone und an einem zweiten, dem ersten Ende gegenüberliegenden Ende ein Drehmitnahmemittel für ein Setzwerkzeug auf. An dem zweiten Ende des Dübelschafts ist ein Druckteller angeordnet, der an der mit dem Dämmstoff in Anlage kommenden Unterseite mit Schneidvorrichtungen versehen ist. Zum Setzen des Befestigungselementes wird dieses in ein zuvor durch den Dämmstoff in die Unterkonstruktion erstelltes Bohrloch eingeführt und über das Drehmitnahmemittel gedreht, wobei der Dämmstoff bereichsweise angeschnitten und der Dübelteller im Dämmstoff versenkt wird. Dabei wird der Dämmstoff unterhalb des Dübeltellers komprimiert. Anschliessend wird mittels eines Verschlusselements aus Dämmstoff die geschaffene Vertiefung in der Dämmstoffplatte verschlossen.

Nachteilig an der bekannten Lösung ist, dass durch das Komprimieren des Dämmstoffes dessen Rohdichte und damit die Dämmeigenschaften des Dämmstoffes verändert werden. Zudem können bei allfälligen Hohllagen zwischen dem Dämmstoff und dem Untergrund Durchbiegungen der Dämmstoffplatte auftreten, die unter Umständen zum Brechen der Dämmstoffplatte führen können.

Die FR 2 713 291 A offenbart ein Befestigungselement, dessen erstes Gewinde in die Dämmstoffplatte eingedreht wird, während ein zweites Gewinde in der Unterkonstruktion fixiert wird. Weitere Befestigungselemente sind aus der DE 40 39 831 C1, der EP 1 400 704 A1, der DE 101 59 632 A1, der EP 1 046 764 A1, der EP 0 811 773 A2 und der EP 1 522 744 A1 bekannt.

### Darstellung der Erfindung

Aufgabe der Erfindung ist es, ein Befestigungselement für die Befestigung von Dämmstoffplatten an einer Unterkonstruktion zu schaffen, bei dem Unregelmässigkeiten des Erscheinungsbildes aufgrund von Störungen der Fassadenoberfläche weitgehend vermieden werden, ohne den Dämmstoff in seinen Eigenschaften zu beeinträchtigen.

Die Aufgabe ist durch die Merkmale des unabhängigen Anspruchs gelöst. Vorteilhafte Weiterbildungen sind in den Unteransprüchen dargelegt.

Gemäss der Erfindung ist ein Befestigungselement für die Befestigung von Dämmstoffplatten an einer Unterkonstruktion vorgesehen, mit einem einen Durchmesser aufweisenden Dübelschaft und mit einem Drehmitnahmemittel für ein Setzwerkzeug, wobei der Dübelschaft sich entlang einer Längsachse erstreckt und ein erstes Ende mit einer aufweitbaren Spreizzone sowie ein zweites Ende aufweist, wobei an dem zweiten Ende des Dübelschafts ein Druckteller angeordnet ist, dadurch gekennzeichnet, dass der Druckteller als mehrgängige Wendel ausgebildet ist, bei welcher ein dem ersten Ende zugewandter Anfang jedes Wendelgangs auf der gleichen axialen Höhe angeordnet ist, und/oder dass der Druckteller als Wendel ausgebildet Ist, bei welcher ein dem ersten Ende zugewandter Anfang der Wendel eine sichelförmige, konkave Ausgestaltung aufweist.

Demgemäss umfasst ein Befestigungselement für die Befestigung von Dämmstoffplatten an einer Unterkonstruktion einen Dübelschaft mit einem Durchmesser und ein Drehmitnahmemittel für ein Setzwerkzeug, wobei sich der Dübelschaft entlang einer Längsachse erstreckt. Der Dübelschaft weist ein erstes Ende mit einer aufweitbaren Spreizzone und ein zweites Ende auf, wobei an dem zweiten Ende des Dübelschafts ein Druckteller angeordnet ist. Der Druckteller ist als Wendel ausgebildet.

Das Drehmitnahmemittel für ein Setzwerkzeug kann z. B. am zweiten Ende des Dübelschafts oder am Druckteller vorgesehen sein. Das Drehmitnahmemittel ist beispielsweise als Nut ausgebildet oder weist eine polygonale Ausgestaltung auf. Das Drehmitnahmemittel kann auch erst durch das Spreizelement zum Aufweiten der Spreizzone beim Einführen desselben in den Dübelschaft oder durch das Setzwerkzeug beim Ansetzen desselben für den drehenden Antrieb des Befestigungselementes ausgebildet werden. Beim Eindrehen des Befestigungselementes in ein zuvor durch den Dämmstoff in die Unterkonstruktion erstelltes Bohrloch wird der Dübelteller versenkt, indem sich die Wendel in den Dämmstoff einschraubt. Die Dämmstoffplatte wird sicher an der Unterkonstruktion befestigt, ohne den Dämmstoff im Bereich des Drucktellers zu komprimieren. Für alle Dicken von Dämmstoffplatten ist nur eine Dübelschaftlänge notwendig, da bei Dämmstoffplatten mit grösseren Dicken das Befestigungselement lediglich tiefer in den Dämmstoff eingeschraubt werden muss.

Gemäss dem ersten Erfindungsaspekt ist die Wendel mehrgängig ausgebildet, wobei die Wendelgänge vorteilhafterweise symmetrisch um den Dübelschaft angeordnet sind. Ein aus einer mehrgängigen Wendel gebildeter Druckteller erlaubt die Reduzierung der erforderlichen Ganglänge bei Gewährleistung einer ausreichenden Befestigung der Dämmstoffplatte an der Unterkonstruktion. Damit sind auch Dämmstoffplatten mit einer geringen Dicke sicher an einer Unterkonstruktion befestigbar.

Gemäss dem ersten Erfindungsaspekt ist ferner ein dem ersten Ende zugewandter Anfang jedes Wendelgangs auf der gleichen axialen Höhe angeordnet, womit ein Einschneiden senkrecht zur Oberfläche der Dämmstoffplatte unterstützt wird.

Vorzugsweise weist die Wendel eine radiale Erstreckung auf, die grösser als der Durchmesser des Dübelschafts ist. Mit der dadurch geschaffenen Kontaktfläche zwischen dem Druckteller und der Dämmstoffplatte ist eine sichere Befestigung der Dämmstoffplatte an der Unterkonstruktion gewährleistet.

Gemäss dem zweiten Erfindungsaspekt weist ein dem ersten Ende zugewandter Anfang der Wendel eine sichelförmige, konkave Ausgestaltung auf. Insbesondere wird an dem Anfang der Wendel am äusseren Umfang eine Einschneidkante geschaffen, die ein gezieltes Einschneiden des Drucktellers in die Dämmstoffplatte erleichtert. Ist der Druckteller als mehrgängige Wendel ausgebildet und sind die Anfänge der einzelnen Wendelgänge auf einer axialen Höhe angeordnet, bilden die Einschneidkanten jedes Wendelgangs jeweils ein Auflager, so dass das Befestigungselement beim Einführen in das Bohrloch senkrecht zur Oberfläche der Dämmstoffplatte ausgerichtet und beim Eindrehen des Befestigungselementes senkrecht zur Oberfläche der Dämmstoffplatte versenkbar ist.

Vorzugsweise erstreckt die Wendel sich zumindest über einen Viertel des Umfangs des Dübelschafts und maximal über den gesamten Umfang des Dübelschafts, so dass das Befestigungselement einfach setzbar ist.

Bevorzugt ist der Aussendurchmesser der Wendel über die gesamte Steigung unveränderlich. Der Druckteller weist dadurch eine auf die Abmessungen des Dübeltellers bezogene, maximale Kontaktfläche mit der Dämmstoffplatte auf und das gesamte Befestigungselement ist einfach zu fertigen.

Vorzugsweise ist die Steigung der Wendel über deren Erstreckung unveränderlich, so dass der Druckteller gleichmässig in den Dämmstoff einschneidbar und somit das Befestigungselement einfach setzbar ist.

Bevorzugt sind zumindest zwei Flügelabschnitte zwischen der Spreizzone und dem Druckteller radial von der Aussenseite abragend am Dübelschaft vorgesehen, welche als Klemmkörper beim Eindringen des Dübelschafts in die Unterkonstruktion und somit als Tiefenanschlag dienen. Sobald die Flügelabschnitte, die sich beispielsweise parallel zu der Längsachse des Dübelschafts erstrecken, mit der Wandung des Bohrlochs in der Unterkonstruktion in Anlage kommen, wird durch die entstehende Klemmung ein weiteres Eindrehen des Befestigungselementes verhindert. Die Flügelabschnitte verhindern beispielsweise bei einem tief in die Unterkonstruktion gebohrten Bohrloch ein zu tiefes Setzen des Befestigungselementes. Ein Abheben der Dämmstoffplatte von der Unterkonstruktion beim Eindrehen des Befestigungselementes in die Dämmstoffplatte wird damit weitgehend ausgeschlossen.

In einer vorteilhaften Ausführungsform sind zwei Flügelabschnitte diametral einander gegenüberliegend angeordnet, was eine sichere Klemmwirkung im Bohrloch der Unterkonstruktion sowie eine einfache Herstellung des Befestigungselementes ermöglicht.

Das Befestigungselement ist vorzugsweise aus einem Kunststoff gefertigt. Alternativ ist das Befestigungselement aus Metall gefertigt. In einer weiteren alternativen Ausführungsform ist das Befestigungselement als Hybridteil ausgebildet, das beispielsweise einen Druckteller aus Metall und einen Dübelschaft aus Kunststoff aufweist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand eines Ausführungsbeispieles näher erläutert. Es zeigen:
- Fig. 1: ein erfindungsgemässes Befestigungselement im gesetzten Zustand in einer Seitenansicht; und
- Fig. 2: einen Schnitt entlang der Linie II-II in Fig. 1 durch das erfindungsgemässe Befestigungselement.

Grundsätzlich sind in den Figuren gleiche Teile mit den gleichen Bezugszeichen versehen.

### Wege zur Ausführung der Erfindung

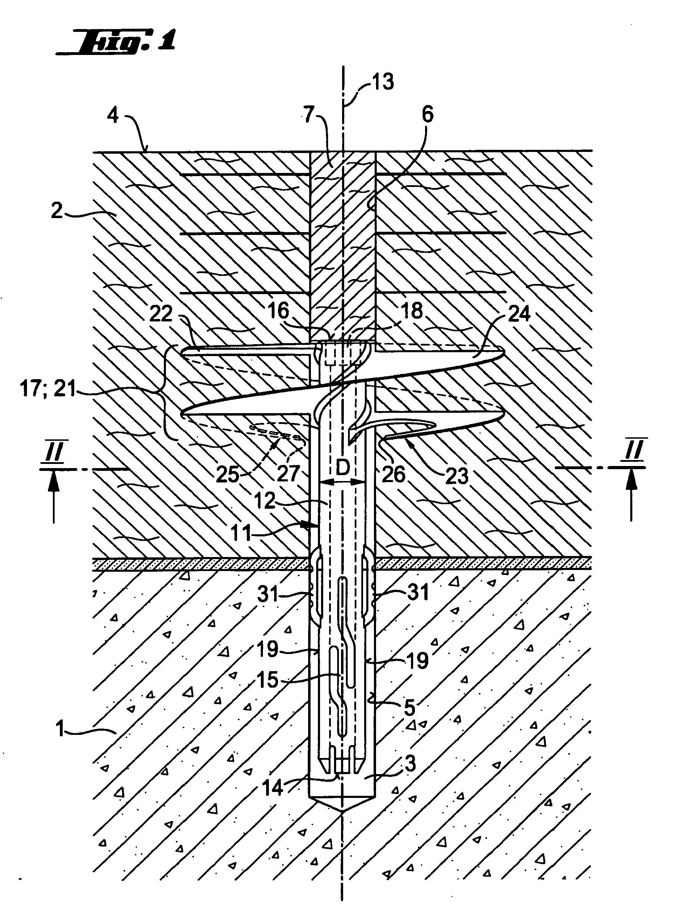

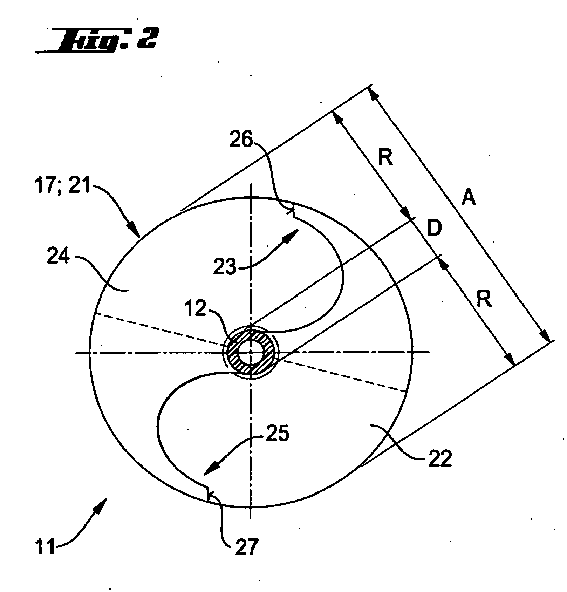

Das in Figur 1 und 2 dargestellte Befestigungselement 11 für die Befestigung von Dämmstoffplatten 2 an einer als Wand ausgebildeten Unterkonstruktion 1 umfasst einen Dübelschaft 12, der einen Durchmesser D aufweist und sich entlang einer Längsachse 13 erstreckt. Der Dübelschaft 12 weist an einem ersten Ende 14 eine aufweitbare Spreizzone 15 und an einem zweiten, dem ersten Ende 14 gegenüberliegenden Ende 16 einen Druckteller 17 auf. Weiter ist am zweiten Ende 16 des Dübelschafts 12 ein Drehmitnahmemittel 18 als Angriff für ein, hier nicht dargestelltes Setzwerkzeug zum Eindrehen des Befestigungselementes 11 vorgesehen.

Der Druckteller 17 ist als zweigängige Wendel 21 ausgebildet, wobei die, dem ersten Ende 14 des Dübelschafts 12 zugewandten Anfänge 23 bzw. 25 der flächigen Wendelgänge 22 bzw. 24 auf der gleichen axialen Höhe des Dübelschafts 12 angeordnet sind. Die Anfänge 23 bzw. 25 der Wendelgänge 22 bzw. 24 weisen zur Ausbildung jeweils eine Einschnittkante 26 bzw. 27 eine sichelförmige Ausgestaltung auf. Die Wendel 21 und somit jeder der Wendelgänge 22 und 24 weist eine radiale Erstreckung R auf, die grösser als der Durchmesser D des Dübelschafts 12 ist. Die Wendelgänge 22, 24 erstrecken sich um etwa dreiviertel des Umfangs des Dübelschafts 12. Über die gesamte Steigung der Wendel 21 ist der Aussendurchmesser A konstant, wobei die Steigung der Wendel 21 über deren Erstreckung unveränderlich ist.

An dem Dübelschaft 12 sind zwei, zwischen der Spreizzone 15 und dem Druckteller 17 radial von der Aussenseite 19 des Dübelschafts 12 abragende Flügelabschnitte 31 vorgesehen, die diametral einander gegenüberliegend angeordnet sind.

Nachfolgend wird anhand der Figur 1 ein Setzvorgang des Befestigungselementes 11 dargelegt.

Durch die Dämmstoffplatte 2, welche an der Unterkonstruktion 1 angeklebt ist, wird ein Bohrloch 3 in die Unterkonstruktion 1 erstellt. Anschliessend wird das Befestigungselement 11 mit der Spreizzone 15 voran in das Bohrloch 3 eingeführt, bis die Einschnittkanten 26 und 27 an der Oberfläche 4 der Dämmstoffplatte 2 anliegen. Mit einem hier nicht dargestellten Setzwerkzeug, das in das Drehmitnahmemittel 18 eingreift, wird das Befestigungselement drehend angetrieben, wobei der wendelförmige Druckteller 17 in die Dämmstoffplatte 2 einschneidet und in diese eindringt. Sobald die Flügelabschnitte 31 mit der Wandung 5 des Bohrlochs 3 in der Unterkonstruktion 1 in Anlage kommen, verklemmt das Befestigungselement 11 und eine weitere Drehung desselben wird verhindert. Die verbleibende Öffnung 6 des Bohrlochs 3 in der Dämmstoffplatte 2 wird vorteilhaft mit einem Abdeckelement 7 verschlossen.

## Patentansprüche

1. Befestigungselement für die Befestigung von Dämmstoffplatten (2) an einer Unterkonstruktion (1) mit einem einen Durchmesser (D) aufweisenden Dübelschaft (12) und mit einem Drehmitnahmemittel (18) für ein Setzwerkzeug, wobei der Dübelschaft (12) sich entlang einer Längsachse (13) erstreckt und ein erstes Ende (14) mit einer aufweitbaren Spreizzone (15) sowie ein zweites Ende (16) aufweist, wobei an dem zweiten Ende (16) des Dübelschafts (12) ein Druckteller (17) angeordnet ist, **dadurch gekennzeichnet, dass** der Druckteller (17) als mehrgängige Wendel (21) ausgebildet ist, bei welcher ein dem ersten Ende (14) zugewandter Anfang (23, 25) jedes Wendelgangs (22, 24) auf der gleichen axialen Höhe angeordnet ist, und/oder
dass der Druckteller (17) als Wendel (21) ausgebildet ist, bei welcher ein dem ersten Ende (14) zugewandter Anfang (23, 25) der Wendel (21) eine sichelförmige, konkave Ausgestaltung aufweist.

2. Befestigungselement nach Anspruch 1, **dadurch gekennzeichnet, dass** die Wendel (21) eine radiale Erstreckung (R) aufweist, die grösser als der Durchmesser (D) des Dübelschafts (12) ist.

3. Befestigungselement nach einem der Ansprüche 1 oder 2, **dadurch gekennzeichnet, dass** die Wendel (21) sich zumindest über einen Viertel des Umfangs des Dübelschafts (12) und maximal über den gesamten Umfang des Dübelschafts (12) erstreckt.

4. Befestigungselement nach einem der Ansprüche 1 bis 3, **dadurch gekennzeichnet, dass** der Aussendurchmesser (A) der Wendel (21) über die gesamte Steigung unveränderlich ist.

5. Befestigungselement nach einem der Ansprüche 1 bis 4, **dadurch gekennzeichnet, dass** die Steigung der Wendel (21) über deren Erstreckung unveränderlich ist.

6. Befestigungselement nach einem der Ansprüche 1 bis 5, **dadurch gekennzeichnet, dass** zumindest zwei Flügelabschnitte (31) zwischen der Spreizzone (15) und dem Druckteller (17) radial von der Aussenseite (19) abragend am Dübelschaft (12) vorgesehen sind

7. Befestigungselement nach Anspruch 6, **dadurch gekennzeichnet, dass** die Flügelabschnitte (31) diametral einander gegenüberliegend angeordnet sind.

## Claims

1. Fastening means for fastening insulation boards (2) to a substructure (1), comprising a dowel shaft (12) having a diameter (D) and a rotary drive means (18) for a setting tool, the dowel shaft (12) extending along a longitudinal axis (13) and having a first end (14) with an expandable spreading zone (15) and a second end (16), a pressure plate (17) being arranged on the second end (16) of the dowel shaft (12), **characterised in that** the pressure plate (17) is in the form of a helix (21) with multiple turns on which a start (23, 25) of each helix turn (22, 24) oriented towards the first end (14) is arranged at the same axial level, and/or **in that** the pressure plate (17) is in the form of a helix (21) on which a start (23, 25) of the helix (21) oriented towards the first end (14) has a crescent-shaped, concave configuration.

2. Fastening means according to Claim 1, **characterised in that** the helix (21) has a radial extent (R) which is greater than the diameter (D) of the dowel shaft (12).

3. Fastening means according to either of Claims 1 and 2, **characterised in that** the helix (21) extends at least over a quarter of the circumference of the dowel shaft (12) and over not more than the entire circumference of the dowel shaft (12).

4. Fastening means according to any one of Claims 1 to 3, **characterised in that** the external diameter (A) of the helix (21) is unchanging over the entire pitch thereof.

5. Fastening means according to any one of Claims 1 to 4, **characterised in that** the pitch of the helix (21) is unchanging over the entire extent thereof.

6. Fastening means according to any one of Claims 1 to 5, **characterised in that** at least two wing sections (31) projecting radially from the outside (19) of the dowel shaft (12) are provided between the spreading zone (15) and the pressure plate (17).

7. Fastening means according to Claim 6, **characterised in that** the wing sections (31) are arranged diametrically opposite one another.

## Revendications

1. Elément de fixation pour la fixation de panneaux d'isolation (2) sur une structure porteuse (1) avec une tige de cheville (12) présentant un diamètre (D) et avec un moyen d'entraînement en rotation (18) pour un outil de pose, dans lequel la tige de cheville (12) s'étend le long d'un axe longitudinal (13) et présente une première extrémité (14) avec une zone d'expansion élargissable (15) ainsi qu'une deuxième extrémité (16), dans lequel un plateau de pression (17) est disposé à la deuxième extrémité (16) de la tige de cheville (12), **caractérisé en ce que** le plateau de pression (17) est réalisé sous forme d'hélice (21) à pas multiples, dans lequel une entrée (23, 25) de chaque pas d'hélice (22, 24) tournée vers la première extrémité (14) est disposée à la même hauteur axiale, et/ou
**en ce que** le plateau de pression (17) est réalisé sous forme d'hélice (21), dans lequel une entrée (23, 25) de l'hélice (21) tournée vers la première extrémité (14) présente une configuration concave en forme de faucille.

2. Elément de fixation selon la revendication 1, **caractérisé en ce que** l'hélice (21) présente une extension radiale (R) supérieure au diamètre (D) de la tige de cheville (12).

3. Elément de fixation selon l'une quelconque des revendications 1 ou 2, **caractérisé en ce que** l'hélice (21) s'étend au moins sur un quart de la circonférence de la tige de cheville (12) et au maximum sur toute la circonférence de la tige de cheville (12).

4. Elément de fixation selon l'une quelconque des revendications 1 à 3, **caractérisé en ce que** le diamètre extérieur (A) de l'hélice (21) est invariable sur l'ensemble du pas.

5. Elément de fixation selon l'une quelconque des revendications 1 à 4, **caractérisé en ce que** le pas de l'hélice (21) est invariable sur son extension.

6. Elément de fixation selon l'une quelconque des revendications 1 à 5, **caractérisé en ce qu'**au moins deux sections en aile (31) sont prévues au niveau de la tige de cheville (12) en saillie radiale du côté extérieur (19) entre la zone d'expansion (15) et le plateau de pression (17).

7. Elément de fixation selon la revendication 6, **caractérisé en ce que** les sections en aile (31) sont disposées de façon diamétralement opposée.
